(19) Europäisches Patentamt
European Patent Office
Office européen des brevets

(11) **EP 3 334 214 B1**

(12) **EUROPEAN PATENT SPECIFICATION**

(45) Date of publication and mention
of the grant of the patent:
**07.08.2024 Bulletin 2024/32**

(21) Application number: **17156467.7**

(22) Date of filing: **16.02.2017**

(51) International Patent Classification (IPC):
**H04W 40/20** (2009.01)    **H04L 45/12** (2022.01)

(52) Cooperative Patent Classification (CPC):
**H04W 40/20; H04L 45/124**

(54) **METHOD, APPARATUS AND COMPUTER PROGRAM FOR ROUTING A DATA PACKET**

VERFAHREN, VORRICHTUNG UND COMPUTERPROGRAMM ZUM ROUTING EINES DATENPAKETS

PROCÉDÉ, APPAREIL ET PROGRAMME INFORMATIQUE POUR L'ACHEMINEMENT D'UN PAQUET DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2016 DE 102016123601**

(43) Date of publication of application:
**13.06.2018 Bulletin 2018/24**

(73) Proprietor: **Fraunhofer-Gesellschaft zur Förderung der angewandten Forschung e.V.**
**80686 München (DE)**

(72) Inventor: **Roscher, Karsten**
**80803 München (DE)**

(56) References cited:
**EP-A1- 2 262 188    US-A1- 2005 111 428**

- **YOON S-J ET AL: "Dual-path-based reliable geocasting for tacticalad hocnetworks", IET COMMUNICATIONS, THE INSTITUTION OF ENGINEERING AND TECHNOLOGY, GB, vol. 5, no. 17, 25 November 2011 (2011-11-25), pages 2542 - 2550, XP006039475, ISSN: 1751-8628, DOI: 10.1049/IET-COM.2010.1042**

**Description**

**Field**

Examples relate to a method, an apparatus and a computer program for routing a data packet from a transmitting node to a destination node over a network comprising a plurality of intermediate nodes, more specifically, but not exclusively, based on a hierarchical ranking of intermediate nodes of the plurality of intermediate nodes.

**Background**

Networks comprising a plurality of moving nodes (e.g. mesh networks, vehicular ad-hoc networks) are a key focus in the research of routing within networks without a fixed topology. For example, in rapidly changing networks, e.g. networks between vehicles on a road, a routing may be highly adaptive, to adapt to the changing interrelation between the vehicles on the road and obstacles blocking or redirecting the transmission of wireless signals.

European patent application EP 2262188 A1 shows a method and apparatus for disseminating a data packet via multi-hop communication in a communication network, which is based on using a position of nodes to determine a route within the multi-hop communication. US patent application US 2005/0111428 A1 relates to a power and delay-sensitive ad-hoc network. In US 2005/0111428 A1, a power level and a delay of nodes is used to determine a route in a multi-hop network.

In Yoon S-J et al: "Dual-path-based reliable geocasting for tactical ad-hoc networks", an approach is chosen that is based on the GPS position of the intermediate node. Instead of using a single path based on the GPS position, two paths are being chosen, and the message is transmitted in parallel over both paths. In addition, "HELLO" messages are being exchanged, which announce the presence and location of the individual nodes to other nodes of the network.

**Summary**

There may be a demand for an improved concept for a routing of data packets over a network comprising a plurality of intermediate nodes.

Such a demand may be satisfied by the subject matter of the claims.

Examples provide a method, an apparatus and a computer program for routing a data packet from a transmitting node to a destination node over a network comprising a plurality of intermediate nodes. The method determines a next hop in a routing based on characteristics of the intermediate nodes, which it uses to determine a hierarchical ranking of the intermediate nodes. For example, the method might only select intermediate nodes located closer to the destination than the transmitting node, and determine a hierarchical ranking of nodes which have a high number of neighbors (which may be indicative of nodes located at intersections) or nodes which have recently been in contact with the transmitting node (which may be indicative of nodes being available for communication). The intermediate nodes are ranked in a hierarchical order, and routing information comprising at least a part of this ranking may be included in a header/wrapper of the data packet to be used by the plurality of intermediate nodes to determine, whether and/or when they should forward the packet.

An example relates to a method for routing a data packet from a transmitting node to a destination node over a network comprising a plurality of intermediate nodes. The method comprises determining a hierarchical ranking of intermediate nodes of the plurality of intermediate nodes for a next hop of the routing based on a plurality of quantifiable characteristics of the intermediate nodes. The plurality of quantifiable characteristics of an intermediate node comprises a geographical position of the intermediate node and an estimated number of further intermediate nodes neighboring the intermediate node. Optionally, the plurality of quantifiable characteristics may comprise a time of a most recent communication between the transmitting node and the intermediate node. The method may enable a routing of the data packet with a reduced delay, while maintaining a high packet delivery ratio and a reduced congestion of wireless transmission resources.

The method further comprises broadcasting the data packet with additional routing information. The additional routing information comprises a plurality of identifiers for a subset of intermediate nodes of the plurality of intermediate nodes. The subset of intermediate nodes is chosen based on the hierarchical ranking of the intermediate nodes. The additional routing information may be used by the intermediate nodes to choose, whether and/or when to forward the data packet towards the destination node.

For example, the additional routing information may comprise the plurality of identifiers in a hierarchical order based on the hierarchical ranking of the subset of intermediate nodes. The hierarchical order may indicate an order, according to which the data packet may be forwarded by the subset of intermediate nodes.

For example, a quantity of identifiers comprised in the plurality of identifiers may be chosen based on at least one of a size of the data packet and a prioritization of the data packet. Adapting the quantity of identifiers according to the size/prioritization of the data packet may enable an adjustment of a tradeoff between a packet delivery ratio, an overhead generated by the additional routing information and a congestion of wireless transmission resources.

For example, the broadcasting of the data packet with the additional routing information may correspond to transmitting a wireless broadcast transmission of the at least one data packet and the additional routing information. For example, the network may be a vehicle-to-vehicle communication network.

For example, the method may further comprise receiving the data packet with additional routing information from a previous hop. For example, the determining of the hierarchical ranking and/or a broadcasting may be performed, if the additional routing information received from the previous hop comprises an identifier of the transmitting node. This may enable a routing of the data packet with a reduced delay, while maintaining a high packet delivery ratio and a reduced congestion of wireless transmission resources.

For example, a broadcasting time of the broadcasting may be based on a hierarchical position of the identifier within the additional routing information received from the previous hop. This may enable a forwarding of the data packet with a reduced probability for wireless transmission collisions/interference.

For example, the determining of the hierarchical ranking and/or the broadcasting may be performed without the identifier of the transmitting node being comprised in the additional routing information received from the previous hop after a waiting time indicated by a quantity of identifiers of intermediate nodes comprised in the additional routing information received from the previous hop. This may enable a forwarding of the packet in case (all of) the intermediate nodes indicated by the additional routing information did not forward the data packet.

For example, the plurality of quantifiable characteristics of an intermediate node may comprise the geographical position of the intermediate node in relation to a geographical position of the destination node and/or in relation to a geographical position of the transmitting node. This may enable selecting nodes located closer towards the destination node.

For example, the determining of the hierarchical ranking may determine the hierarchical ranking for intermediate nodes of the plurality of intermediate nodes neighboring the transmitting node and located closer to a geographical position of the destination nodes than the transmitting node. This may enable a progress of the data packet towards the destination node.

For example, the further intermediate nodes neighboring the intermediate node may correspond to further intermediate nodes having communicated with the intermediate node during a pre-defined timeframe. Alternatively or additionally, the further intermediate nodes neighboring the intermediate node may correspond to further intermediate nodes that are presumed to be reachable from the intermediate node. Alternatively or additionally, the further intermediate nodes neighboring the intermediate node may correspond to further intermediate nodes located within a pre-defined area surrounding a geographical position of the intermediate node.

For example, the plurality of quantifiable characteristics of an intermediate node may comprise the geographical position of the intermediate node, the time of the most recent communication between the transmitting node and the intermediate node and the estimated number of further intermediate nodes neighboring the intermediate node. This may enable a routing of the data packet with a reduced delay, while maintaining a high packet delivery ratio and a reduced congestion of wireless transmission resources.

For example, the determining of the ranking may comprise determining a mathematical distance of the plurality of quantifiable characteristics of at least a subset of the plurality of intermediate nodes to reference characteristics. The reference characteristics may be based on the plurality of quantifiable characteristics of at least the subset of the plurality of intermediate nodes. The ranking of the plurality of intermediate nodes may be based on the mathematical distance of the plurality of quantifiable characteristics of at least the subset of the plurality of intermediate nodes from the reference characteristics. Using the mathematical distance to determine the ranking may enable multi-criteria decision making based on a plurality of characteristics.

For example, the method may further comprise determining an estimated number of further communication nodes neighboring the transmitting node. The method may further comprise transmitting information related to the estimated number of further communication nodes neighboring the transmitting node to the plurality of intermediate nodes.

An example relates to a computer program having a program code for performing the method, when the computer program is executed on a computer, a processor, or a programmable hardware component.

An example relates to a communication node comprising a transceiver module configured to communicate with further communication nodes in a vehicle-to-vehicle communication network. The communication node further comprises a control module configured to determine an estimated number of further communication nodes neighboring the communication node. The control module is further configured to transmit information related to the estimated number of further communication nodes neighboring the communication node to the further communication nodes via the transceiver module. This may enable a more efficient routing via the communication node in a network comprising a plurality of (intermediate) communication nodes.

For example, the control module may be configured to communicate with the further communication nodes using one or more encapsulated packets. The one or more encapsulated packets may comprise an exterior packet comprising at least one interior packet. The control module may be configured to transmit payload information of the encapsulated packet within the at least one interior packet and to transmit the information related to the estimated number of further communication nodes neighboring the communication node within a header of the exterior packet. This may enable a processing of the information related to the estimated number of further communication nodes neighboring the communication node without the need for decoding further portions/layers of the encapsulated packets.

For example, the control module may be further configured to perform the method for routing a data packet from a transmitting node to a destination node over a network comprising a plurality of intermediate nodes. The communication node may be the transmitting node and the vehicle-to-vehicle communication network may be the network.

An example relates to a method for a communication node. The method comprises determining an estimated number of further communication nodes within a vehicle-to-vehicle communication network neighboring the communication node. The method further comprises transmitting information related to the estimated number of further communication nodes neighboring the communication node to the further communication nodes via the vehicle-to-vehicle communication network.

**Brief description of the Figures**

Some examples of apparatuses and/or methods will be described in the following by way of example only, and with reference to the accompanying figures, in which

Fig. 1 illustrates a flow chart of a method for routing a data packet from a transmitting node to a destination node over a network comprising a plurality of intermediate nodes;
Fig. 2 illustrates a block diagram of a communication node;
Fig. 3 shows a packet delivery ratio in a freeway scenario for a simplified communication model with optimal shortest path routing;
Fig. 4 shows a comparison of packet delivery ratios for different weight combinations and delay constraints in a freeway scenario;
Fig. 5 shows a comparison of a packet delivery ratio for different delay requirements in a freeway scenario;
Fig. 6 shows a packet delivery ratio for the shortest path optimal routing with various vehicle departure rates in a grid scenario; and
Fig. 7 shows a packet delivery ratio for different delay requirements in a grid scenario.

**Detailed Description**

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described.

Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

At least some examples related to method and apparatus for interconnecting communication participants via intermediate stations. Interconnected vehicles may exchange information in real-time to collect information from the surrounding and coordinate joint driving strategies. Here, communication may be required to take place with a high degree of reliability and a reduced latency. Direct communication between the vehicles might not always be possible as, where applicable, they are yet outside the range or larger objects (vehicles, signs, buildings) prevent the exchange of data. The use of other vehicles or of transport infrastructure as a relay station may bridge such gaps - this is called multi-hop communication.

However, some methods may be unable to ensure a high degree of reliability with simultaneously guaranteeing a low latency (e.g. <100 ms). Particularly, the standardized Greedy and Contention Based Forwarding (CBF) methods may reveal serious deficiencies. Selecting only one relay station in Greedy may provide a low degree of reliability in dynamic scenarios. While CBF may be more reliable due to several relays, it may generate unnecessary waiting times in each step due to the decentralized coordination function, and thus the delay times may quickly amount to several hundred milliseconds. Both methods may be based on an exclusive optimization using the distance, which may be expected to result in as few hops as possible and thus a high level of efficiency. At least some examples may be based on considering other factors as well.

Due to the limited range of direct communication, the radius for exchanging information may be limited for interconnected vehicles or other communication participants. The use of other vehicles or infrastructure as a relay station (e.g. intermediate nodes) may bridge potential gaps and enable an exchange of messages around obstacles (buildings, large vehicles) as well. However, a short delay time and low packet loss rates may be required for safety-critical applications. Some methods may improve only one of these aspects.

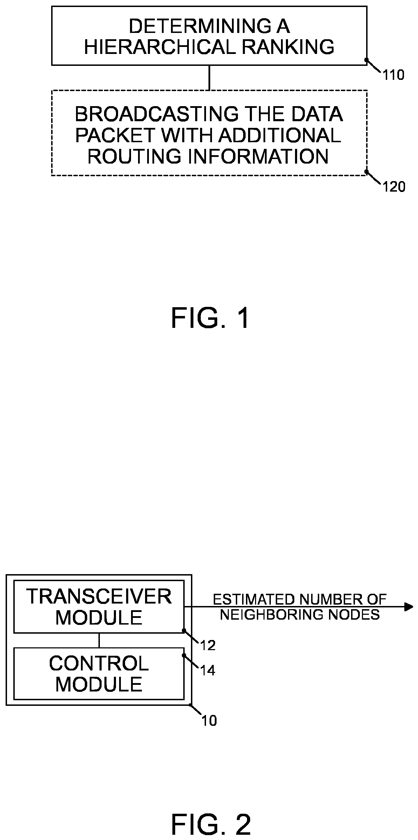

Fig. 1 illustrates a flow chart of a method for routing a data packet from a transmitting node to a destination node over a network comprising a plurality of intermediate nodes. The method comprises determining 110 a hierarchical ranking of intermediate nodes of the plurality of intermediate nodes for a next hop of the routing based on a plurality of quantifiable characteristics of the intermediate nodes. The plurality of quantifiable characteristics of an intermediate node comprises a geographical position of the intermediate node and at least one of a time of a most recent communication between the transmitting node and the intermediate node and an estimated number of further intermediate nodes neighboring the intermediate node.

For example, the routing of the data packet may comprise selecting a next hop (e.g. by selecting one or more ranked candidates for the next hop) via an intermediate node of the plurality of intermediate nodes towards the destination node. For example, the routing of the data packet may be a sender-based routing of the data packet. For example, the routing of the data packet may attempt a sender-based routing of the data packet with a fallback on a receiver-based routing of the data packet.

For example, the data packet may correspond to a bit sequence, e.g. a bit sequence comprising more than 50 bit (or more than 100 bit, more than 150 bit, more than 200 bit) and/or less than 1500 bit (or less than 1200 bit, less than 1000 bit, less than 800 bit, less than 500 bit, less than 300 bit). For example, the data packet may correspond to an encapsulated data packet. For example, the encapsulated data packet may comprise an exterior packet comprising at least one interior packet. For example, the interior data packet may comprise payload information of the encapsulated data packet, and the exterior packet may comprise header information and the interior data packet. For example, the header information of the exterior data packet may comprise additional routing information.

For example, the transmitting node, the destination node and/or the plurality of intermediate nodes may correspond to communication nodes, e.g. communication nodes within a direct-communication wireless network. For example, the transmitting node, the destination node and/or the plurality of intermediate nodes may correspond to one or more communication nodes of the group of a vehicle, a vehicular communication node, a roadside infrastructure, a relay node, a mobile sensor node, a mesh node, and a mobile device. For example, the network may correspond to one of a car to car (C2C) communication network, a vehicle to vehicle (V2V) communication network, a car to x (car or infrastructure, C2X) network, a vehicle to x (vehicle or infrastructure, V2X) network, a mesh network, a sensor network, and an ad-hoc network. For example, the transmitting node may correspond to a communication node within the network currently storing the data packet for a transmission to a next hop within the network. For example, the destination node may correspond to a communication node within the network designated as receiver of the data packet, e.g. as final receiver of the data packet or as gateway towards a further network.

For example, the determining 110 of the hierarchical ranking may rank at least a subset of intermediate nodes of the plurality of intermediate nodes according to a suitability of the intermediate nodes of at least the subset of intermediate nodes to be the next hop of the routing. For example, the determining 110 of the hierarchical ranking may calculate a ranking value, a rank and/or a sorting order for the intermediate nodes of at least the subset of intermediate nodes. For example, the determining 110 of the hierarchical ranking may be based on multi-criteria decision making based on the plurality of quantifiable characteristics. For example, the determining 110 of the hierarchical ranking may pre-select or exclude intermediate nodes of the plurality of intermediate nodes (e.g. to obtain the subset of intermediate nodes), e.g. based on a geographical position of the intermediate nodes of the plurality of intermediate nodes (e.g. in relation to a geographical position of the transmitting node and/or in relation to a geographical position of the destination node), based on a movement vector of the intermediate nodes of the plurality of intermediate nodes (e.g. in relation to a movement vector of the transmitting node) and/or based on a node type of intermediate nodes of the plurality of intermediate nodes. For example, the determining 110 of the hierarchical ranking may determine the hierarchical ranking for intermediate nodes of the plurality of intermediate nodes neighboring the transmitting node and located closer to a geographical position of the destination nodes than the transmitting node.

For example, a first communication node and a second communication node (e.g. the transmitting node and an intermediate node of the plurality of intermediate nodes) may be neighboring nodes if the first communication node has communicated with the second communication node during a pre-defined timeframe, e.g. if the first communication node has received a communication from the second communication node. For example, the transmitting node and an intermediate node of the plurality of intermediate node may be neighboring communication node, if the transmitting node has received (or overheard) a message from the intermediate during the pre-defined timeframe, e.g. a status message (e.g. a Cooperative Awareness Message, CAM, of a C2C communication), a notification message (e.g. a Decentralized Environmental Notification Message, DENM) or a message beacon indicating a presence of the intermediate node. For example, the first communication node and the second communication node may be neighboring communication nodes, if a transmission of the second communication node has a signal strength above a signal strength threshold when received by the first communication node (during the pre-defined time interval). For example, the first communication node and the second communication node may be neighboring communication nodes, if the second communication node is presumed to be reachable from the first communication node. For example, the first communication node and the second communication node may be neighboring communication nodes, if the second communication node is located within a pre-defined area surrounding a geographical position of the first communication node. For example, the pre-defined area may form a circular shape, a square shape or an oblong shape around the first communication node. For example, the pre-defined area around the first communication node area may be offset towards a direction of movement of the first communication node.

For example, the next hop of the routing may correspond to an intermediate node of the plurality of intermediate nodes, which is designated to forward the data packet towards the destination node. For example, the next hop of the routing may correspond to one of the intermediate nodes indicated by the hierarchical ranking.

For example, the plurality of quantifiable characteristics of an intermediate node may comprise the geographical position of the intermediate node in relation to a geographical position of the destination node and/or in relation to a geographical position of the transmitting node. For example, the plurality of quantifiable characteristics may further comprise a distance progress towards the destination node (e.g. based on a distance between the transmitting node and the destination node and based on a distance between an intermediate node and the destination node). For example, the geographical position may correspond to absolute coordinates, e.g. based on a satellite navigation system, or to a position relative to an infrastructure, e.g. a road or road network. For example, a time of a most recent communication (between the transmitting node and an intermediate node of the plurality of intermediate nodes) may correspond to a time of (timestamp or duration since) the most recent communication (e.g. a status message, a notification message, a message beacon) has been received from the intermediate node by the transmitting node. For example, the estimated number of further intermediate nodes neighboring the intermediate node may correspond to a number (amount) of further intermediate nodes neighboring the intermediate node indicated by secondary indicators, e.g. messages received by the neighboring nodes, a geographical position etc. For example, the further intermediate nodes neighboring the intermediate node may correspond to further intermediate nodes having communicated with the intermediate node during a pre-defined timeframe. Alternatively or additionally, the further intermediate nodes neighboring the intermediate node may correspond to further intermediate nodes that are presumed to be reachable from the intermediate node (e.g. based on previously received messages from the further intermediate nodes). Alternatively or additionally, the further intermediate nodes neighboring the intermediate node may correspond to further intermediate nodes located within a pre-defined area surrounding a geographical position of the intermediate node. For example, the pre-defined area may form a circular shape, a square shape or an oblong shape around the intermediate node. For example, the pre-defined area around the intermediate node area may be offset towards a direction of movement of the intermediate node. For example, method may further comprise receiving information related to the estimated number of further intermediate nodes (communication nodes) neighboring the intermediate nodes from the plurality of intermediate nodes.

For example, in at least some embodiments (e.g. in Low Delay forwarding with Multiple Candidates, LDMC) the plurality of quantifiable characteristics of an intermediate node comprises the geographical position of the intermediate node, the time of the most recent communication between the transmitting node and the intermediate node and the estimated number of further intermediate nodes neighboring the intermediate node.

For example, the determining 110 of the ranking may comprise determining a mathematical distance of the plurality of quantifiable characteristics of at least a subset of the plurality of intermediate nodes to reference characteristics. The reference characteristics may be based on the plurality of quantifiable characteristics of at least the subset of the plurality of intermediate nodes. The ranking of the plurality of intermediate nodes may be based on the mathematical distance of the plurality of quantifiable characteristics of at least the subset of the plurality of intermediate nodes from/to the reference characteristics.

For example, the determining 110 of the ranking may comprise selecting a subset of the plurality of intermediate nodes, e.g. a subset of the plurality of intermediate nodes located closer to the destination node than the transmitting node. For example, the determining 110 of the ranking may further comprise determining the plurality of quantifiable characteristics for the subset of intermediate nodes. For example, for k intermediate nodes of the subset of intermediate nodes and j quantifiable characteristics of the plurality of quantifiable characteristics, the determining 110 of the ranking may comprise determining $k \cdot j$ quantifiable characteristics for the k intermediate nodes, e.g. in a k $\times$ j or j $\times$ k decision matrix. For example, the determining 110 of the ranking (e.g. the determining of the mathematical distance) may further comprise normalizing the quantifiable characteristics of the subset of intermediate nodes. For example, the determining 110 of the ranking (e.g. the determining of the mathematical distance) may further comprise weighting the quantifiable characteristics of the subset of intermediate nodes using one or more weighting factors. For example, for the (each) quantifiable characteristic of the plurality of quantifiable characteristics, the determining of the mathematical distance may comprise selecting a favorable (e.g. a best or ideal) value among the quantifiable characteristics of the subset of intermediate nodes for the reference characteristics. For example, for the (each) quantifiable characteristic of the plurality of quantifiable characteristics, the determining of the mathematical distance may comprise selecting an unfavorable (e.g. a worst) value among the quantifiable characteristics of the subset of intermediate nodes for the reference characteristics. For example, the reference characteristics may comprise the favorable values and/or the unfavorable values for the plurality of quantifiable characteristics (e.g. an ideal solution and a negative ideal solution). For example, the determining of the mathematical distance may further comprise determining a (Euclidian) distance between the quantifiable characteristics of a/each intermediate node of the subset of intermediate nodes to the reference characteristics within a geometric/vector representation, to obtain a relative closeness between the/each intermediate node and the reference characteristics. For example, the determining 110 of the hierarchical ranking may be based on the relative closeness of the quantifiable characteristics of the subset of intermediate nodes to the reference characteristics

For example, the method may further comprise broadcasting 120 the data packet with additional routing information. For example, the data packet may comprise a header portion and a payload portion, and the header portion may comprise the additional routing information. For example, the data packet may be an encapsulated data packet comprising an exterior packet, the exterior packet comprising an interior package comprising the payload portion. For example, a header portion of the exterior package may comprise the additional routing information. The additional routing information may comprise a plurality of identifiers for a subset of intermediate nodes of the plurality of intermediate nodes (e.g. for the subset of intermediate nodes determined above). For example, the plurality of identifiers may correspond to a plurality of network identifiers of the subset of intermediate nodes, or to temporary identifiers, e.g. temporary identifiers based on pseudonym certificates of entities of a car to car (or C2X/V2X) communication network. The subset of intermediate nodes may be chosen based on the hierarchical ranking of the intermediate nodes. For example, the additional routing information may comprise the plurality of identifiers in a hierarchical order (or with an index indicating the hierarchical order) based on the hierarchical ranking of the subset of intermediate nodes, e.g. as a list or a vector of identifiers. For example, a quantity of identifiers comprised in the plurality of identifiers may be chosen based on at least one of a size of the data packet (e.g. to adjust an overhead of the data packet to a packet size) and a prioritization of the data packet (e.g. to increase a likelihood of delivering the data packet at a cost to an occupancy of wireless resources). For example, the broadcasting 120 of the data packet with the additional routing information may correspond to transmitting a wireless broadcast transmission of the at least one data packet and the additional routing information.

For example, the method may further comprise receiving the data packet with additional routing information from a previous hop. The determining 110 of the hierarchical ranking and/or the broadcasting 120 may be performed, if the additional routing information received from the previous hop comprises an identifier (e.g. network identifier or temporary identifier) of the transmitting node.

For example, a broadcasting time of the broadcasting 120 of the data packet with the additional routing information may be based on a hierarchical position of the identifier within the additional routing information received from the previous hop. For example, the broadcasting 120 of the data packet with the additional routing information may delay the broadcasting based on a number of other communication nodes with a hierarchical preference as indicated by the additional routing information received from the previous hop (e.g. by waiting for transmission slots of the other communication nodes with the hierarchical preference to pass). For example, the broadcasting 120 of the data packet may abstain from/cancel the broadcasting, if the transmitting node receives a broadcast of the data packet by one of the other intermediate nodes indicated by the additional routing information received from the previous hop. For example, the determining 110 of the hierarchical ranking and/or the broadcasting 120 may be performed without the identifier of the transmitting node being comprised in the additional routing information received from the previous hop after a waiting time indicated by a quantity of identifiers of intermediate nodes comprised in the additional routing information received from the previous hop has elapsed. For example, the additional routing information might not comprise identifiers of communication nodes, and the determining 110 of the hierarchical ranking and/or the broadcasting 120 may be performed without a waiting time indicated by a quantity of identifiers of intermediate nodes comprised in the additional routing information received from the previous hop has elapsed.

Fig. 2 illustrates a block diagram of a communication node 10. The communication node 10 comprises a transceiver module 12 configured to communicate with further communication nodes in a network, e.g. a vehicle-to-vehicle communication network. The communication node 10 further comprises a control module 14.

For example, the control module 14 may be configured to perform the method for routing a data packet from a transmitting node to a destination node over a network comprising a plurality of intermediate nodes as introduced in connection with Fig. 1. The communication node 10 may correspond to the transmitting node.

The control module 14 may be further configured to determine an estimated number of further communication nodes neighboring the communication node 10. The control module 14 may be further configured to transmit information related to the estimated number of further communication nodes neighboring the communication node to the further communication nodes via the transceiver module 12. For example, the control module 14 may be configured to determine the estimated number of further communication nodes neighboring the communication node based on previously received messages from the further communication nodes within a pre-defined timeframe, for example previously received messages received within the previous 10s (or previous 5s, previous 3s). For example, the control module 14 may be configured to determine the estimated number of further communication nodes neighboring the communication node based on previously received messages from the further communication nodes having a signal strength above a signal strength indicator. For example, the control module 14 may be configured to determine the estimated number of further communication nodes neighboring the communication node based on information related to a position and/or information related to a movement vector/trajectory received from the further communication nodes, e.g. within status messages or notification messages.

For example, the control module 14 may be configured to communicate with the further communication nodes using one or more encapsulated packets, wherein the one or more encapsulated packets comprise an exterior packet comprising at least one interior packet, wherein the control module is configured to transmit payload information of the encapsulated packet within the at least one interior packet and to transmit the information related to the estimated number of further communication nodes neighboring the communication node within a header of the exterior packet.

The transceiver module 12 may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc. In embodiments the control module 14 may be implemented using one or more processing units, one or more processing devices, any means for processing, such as a processor, a computer or a programmable hardware component being operable with accordingly adapted software. In other words, the described function of the control module 14 may as well be implemented in software, which is then executed on one or more programmable hardware components. Such hardware components may comprise a general purpose processor, a Digital Signal Processor (DSP), a micro-controller, etc.

More details and aspects of the communication node are mentioned in connection with the proposed concept or one or more examples described above (e.g. Fig. 1). The communication node may comprise one or more additional optional features corresponding to one or more aspects of the proposed concept or one or more examples described above or below.

Examples provide an exemplary method (Low Delay Forwarding with Multiple Candidates - LDMC for VANETs using Multi/Criteria Decision Making) which may combine the reliability of several relays and the low latency of a transmitter-based selection of the next hop, and may thus enables a (more) reliable multi-hop communication for real-time applications.

Vehicular ad hoc networks (VANETs) are envisioned to support driver assistance and automated driving posing strict requirements on communication reliability and delay. To support these applications, at least some examples introduce Low Delay Forwarding with Multiple Candidates (LDMC), a geographic routing approach combining the advantages of sender-based control and opportunistic forwarding. Candidates may be ranked based on position, time since the last status update and neighborhood information using multi-criteria decision making. Priority-dependent timers may reduce the contention among forwarders. An evaluation for freeway and grid scenarios may show substantial improvement over existing protocols for real-time applications requiring 100 ms or less end-to-end delay.

Wireless communication among vehicles may be intended to increase the perception range of advanced driver assistance systems beyond the limits of conventional sensors. Furthermore, it may be envisioned to be a key enabler for cooperative automated driving. Vehicular ad-hoc networks (VANETs) may provide this kind of connectivity using dedicated short range communication such as 802. 11p (a standard by the Institute of Electrical and Electronics Engineers, IEEE) or its European counterpart ETSI ITS-G5 (European Telecommunications Standards Institute Intelligent Transport Systems).

Multi-hop network protocols may further increase the communication range beyond one direct wireless link, e.g. around obstacles or buildings. However, discovery and maintenance of suitable forwarding paths may remain a challenging task due to the dynamic nature of VANETs with high relative speeds and constantly changing topologies. While conventional ad hoc routing approaches based on proactive path maintenance or reactive (on-demand) end-to-end path discovery may struggle to provide good connectivity with reasonable overhead, *geographic* routing protocols may be a promising candidate for multi-hop communication in VANETs and may be also adopted for standardization in Europe.

Geographic routing protocols may rely on the nodes' capability to determine their own location since it is used for addressing and forwarding decisions. However, this might not be a major concern in the context of driver assistance and automated driving since positioning systems such as GPS (Global Positioning System) or GLONASS (Global Navigation Satellite System) may be already widely deployed in vehicles, e.g. for navigation or fleet tracking. Based on position information, routing decisions may be made locally with each individual *hop* while progressing towards the destination. Therefore, information exchange about the network topology may be limited to the local scope, which may reduce the protocol overhead. Furthermore, it may enable almost instant adaption to changes in the topology, even while a message is on its way. Geographic routing protocols can be roughly divided into *sender-based* and *receiver-based* approaches based on the strategy for next hop selection.

In sender-based approaches, forwarding is controlled by the transmitting node. A next hop may be generally selected based on status information exchanged via periodic beacons. This may enable low end-to-end delay as long as each node can process the packet instantly. However, using a single candidate as next hop may make related protocols susceptible to transmission errors caused by unreliable wireless links and may lead to decreased reliability and lower packet delivery ratios.

Receiver-based (or opportunistic) approaches on the other hand may shift the forwarding decision to the receiving nodes using broadcast transmissions on the wireless medium. (All) Receivers may apply a distributed function to determine the next node to rebroadcast the packet. Individual timers for each candidate might be used to coordinate the channel access. If the timer expires, the packet may be sent again. However, if another transmission of the same packet is overheard while waiting, the timer may be canceled and the packet is discarded. Using all available forwarders may increase reliability since progress can be made as long as a packet is received by at least one candidate. However, waiting times with each hop may accumulate over the entire path and can lead to a substantial end-to-end delay.

To address the aforementioned problems, examples provide *Low Delay Forwarding with Multiple Candidates* (LDMC). It may combine the low latency performance of sender-based selection with the increased reliability offered by opportunistic protocols.

Examples may be based on at least a subset of the following features:

- Direct neighbors may be ranked using multi-criteria decision making based on the *Technique for Order Preference by Similarity to Ideal Solution* (TOPSIS) to balance different optimization goals, e.g. maximizing the distance gain per hop while maintaining high reliability.
- Neighborhood information of potential next hop candidates may be considered to improve routing performance in complex scenarios by preferring well connected nodes.
- A simplified communication model and an optimal shortest path routing algorithm for this model may be used in examples. They may be used to investigate the limits of geographic approaches for the simulated scenarios with varying network connectivity and node distribution.

Simulation results may show that LDMC achieves packet delivery ratios comparable to opportunistic protocols while further improving the delay performance especially for grid-like scenarios.

The method (Low Delay Forwarding with Multiple Candidates - LDMC) may combine the reliability of several relays and the low latency of a transmitter-based selection of the next hop. For this purpose, in each step, the neighbors may be sorted (e.g. hierarchically ranked) in accordance with their suitability as candidates for forwarding based on a metric. Then, the best n candidates may be selected and added to the packet in descending order. The priority (and thus the delay time) during forwarding may depend on the position in the list of candidates. If the transmission to one or more candidates fails, the nodes further down in the list might take over and thus enable a robust handling of transmission errors.

In contrast some other methods, the ranking of the nodes might not only be based on the geographical distance. In addition, the time passed since the last packet (age) was received (e.g. a time of a most recent communication between the transmitting node and the intermediate node) and the number of immediate neighbors (connectivity) (e.g. an estimated number of further intermediate nodes neighboring the intermediate node) may be considered. The age may serve as heuristics for detecting interrupted connections. The older an entry, the more likely it may be that the respective candidate is not within range at the moment. The connectivity of the candidates - i.e., the degree of interconnection in their surrounding - may be approximated by the number of neighbors. Such number may be exchanged in regular status messages. Thus, when selecting candidates for forwarding, particularly those nodes may be selected that have a higher number of neighbors and thus many options for forwarding. This may increase the degree of reliability and reduces the probability of dead ends in routing. Further, heuristics may be suited to prefer candidates close to crossings, which may constitute particularly neuralgic points for the connectivity in urban scenarios.

Individual criteria may for example be combined using Multi Criteria Decision Making (MCDM): Technique for Order Preference by Similarity to Ideal Solution (TOPSIS). TOPSIS may assess the individual options (candidates) based on their distance to the best and worst alternative in each case. In this respect, the individual criteria may be weighted in order to give higher priority to specific aspects.

At least some examples may provide a method for assessing the suitability of candidates for forwarding based on the time that has passed since the last message in order to prefer active links. At least some examples may provide a method for assessing the suitability of candidates for forwarding based on the number of their direct neighbors in order to prefer stations having a higher connectivity. At least some examples may provide a method for combined assessment of the candidates based on the distance-related progress and the time that has passed since the last message and the number of their direct neighbors based on the TOPSIS method. At least some examples may provide a method (protocol) for considering several candidates for a forwarding step in order to increase reliability. Here, the presorting performed by the transmitter may lead to a lower latency compared to purely receiver-based methods.

The goal of at least some embodiments of LDMC may be to provide a (substantially) reliable multi-hop routing of unicast messages with low end-to-end delay. Opportunistic protocols may already provide good reliability. However, distributed coordination of the forwarders may be generally realized through timer-based contention where each node applies a delay before the packet is retransmitted. The function to calculate the individual delay may balance two opposing goals: a) short waiting times to reduce the end-to-0end delay and b) sufficient timely separation among candidates to avoid collisions on the wireless medium. Selecting a short interval may be beneficial if the network density and therefore the number of contending nodes is low since overall delay is reduced. However, applying the same setup to a dense scenario may lead to many collisions due to similar waiting times for multiple contenders.

In addition, the end-to-end delay performance of approaches where the individual waiting time is based on relative positions or distances, e.g. geographical progress towards the destination or distance from a target node, may depend on the distribution of the nodes. Equation 1 may show the delay function of a CBF (Contention Based Forwarding) algorithm as specified in ETSI (European Telecommunications Standards Institute) standard ETSI EN 302 663 V1.2.1 as an example:

$$t_{CBF} = \begin{cases} t_{max} + \frac{t_{min} - t_{max}}{d_{max}} & if\ p \le d_{max} \\ t_{min} & if\ p > d_{max} \end{cases} \quad (1)$$

where the times $t_{min}$, $t_{max}$ and the distance $d_{max}$ are configuration parameters and $p$ is the distance progress towards the destination compared to the previous node. Here, an uneven distribution of nodes may lead to a long unused period without contention until finally the first candidate may try to retransmit. In a worst case scenario, (only) nodes close to the current sender might be reached directly. Thus, up to $t_{max}$ waiting time may be applied without (any) contention before that. Assuming default values specified in the ETSI standard, this may lead to up to 100 ms per hop, which might not be acceptable for applications with stringent delay requirements. To avoid the aforementioned issues, LDMC may use the transmitter of a packet to indirectly coordinate the contention among receivers.

*Assumptions:* similar to other geographic routing protocols, the current position of the destination may be known by the source before sending a packet. This might either be achieved through an additional *Location Service* or with information comprised in already received packets. Therefore, the destination position may be assumed to be known a priori with the algorithms during subsequent evaluation. Furthermore, basic information about neighbors in direct communication range may be exchanged via periodic network layer beacons comprising a station identifier, the current position and the number of direct neighbors.

*Algorithm:* In each forwarding step, the current node $n$ may specify an ordered list of forwarders F = {$f_0$,...,$f_l$} where each $f_k$ is the station identifier of a direct neighbor *of n* that is closer to the destination than n. The order of the elements in F may be determined using the TOPSIS approach described above. F may be added to the header of the packet before it is transmitted using the broadcast primitive of the wireless medium. A configuration parameter $i_{max}$ may be used to limit the header size. If IFI > $i_{max}$, (only) the first $i_{max}$ entries may be added to the header. More candidates may increase reliability through additional relay nodes while shorter lists may reduce the overhead caused by additional fields in the packet headers.

Upon reception of a packet, each node may check if it is the destination. If so, the payload may be provided to the higher layers. If not, the receiver may take part in the contention for rebroadcasting (forwarding) if its local identifier is part of the forwarder list comprised in the header. Decentralized coordination of rebroadcasting attempts may be achieved with a timer-based approach where the waiting time $t_{wait}$ is based on the position $p_c$ of the receiver in the list (starting with 0 for the first entry):

$$t_{wait} = p_c \cdot t_f \qquad (2)$$

$t_f$ specifies the time difference between two consecutive list entries. It may be a configuration parameter that might be large enough to sufficiently separate channel access attempts over time to avoid packet loss due to collisions. Similar to other opportunistic approaches, a node may cancel its timer and drop the packet if it overhears another node forwarding the same packet during its waiting time.

*Extension:* Reliability of LDMC may be improved especially for forwarder lists with only few entries - by allowing receiving nodes not in the list to still participate in the forwarding process. This may compensate for outdated status information and may also include candidates that the transmitting node n was not yet aware of. Since there might be no list index to determine the waiting time, they may apply the basic CBF procedure instead. However, this might only be the case if all preferred entries in the list failed to forward the packet. Thus, the CBF period may start after the waiting duration implied by the length of the forwarder list:

$$t_{wait,CBF} = |F| \cdot t_f + t_{CBF} \ (3)$$

where IFI is the size of the forwarder list and $t_{CBF}$ is the CBF timeout duration calculated with Equation 1.

Ranking Candidates with TOPSIS: The ranking of the nodes for the forwarder list may play a crucial role for the performance of our LDMC approach: The more suitable the selection of the first list entries, the smaller the end-to-end delay may be.

*Criteria:* Some geographic routing protocols may aim to maximize the distance covered in each step and thus minimize the number of hops. The reason for that is threefold: a) each additional transmission takes time and thus increases the delay, b) it also occupies the shared medium and thus requires additional resources, and c) it increases the potential for packet loss since wireless links are unreliable. This metric may be defined in terms of *distance progress* $p(n,c)$ from the previous node *n* to the current node c:

$$p(n,c) = dist(n,d) - dist(c,d) \qquad (4)$$

where *d* is the destination and $dist(x,y)$ is the distance between *x* and *y.*

However, received signal strength and thus reliability may decrease with distance. It may be more beneficial to tolerate additional hops with more reliable links instead of trying to reach a node that is barely in range. Instead of a ranking based on position, neighbors with recent status updates may be preferred in at least some examples over those with older entries instead. The selection of suitable candidates may depend on up-to-date information and recent contact may increase the chance of still being in range. At least some example may (additionally) use the number of direct neighbors as a metric to prefer well connected nodes - probably at an intersection or open space - over candidates with less connectivity.

In summary, candidates may be ranked by three different and potentially opposing criteria:

- D: distance progress towards the destination
- A: age of the status information (time since the last update)
- N: number of direct neighbors

At least some examples may be based on using TOPSIS to rank the forwarding candidates. It may have several beneficial properties in this context. Criteria may have inhomogeneous dimensions and units since normalization may be applied in the process. Furthermore, ranking may be based on relative comparison of the alternatives in the current set of options. Thus, absolute parameter values required to be suitable for all scenarios might be avoided, e.g. $t_{max}$ and $d_{max}$ from CBF (see Eq. 1).

An exemplary embodiment for ranking the candidates may be as follows:

1) From (all) available neighbors, select (only) those that are closer to the destination than the current node. This step may be used to avoid routing loops and to enable that the process converges towards the destination. Result is the list of candidates $F = f_1,...,f_k$ with k elements.

2) Create a $k \times l$ decision matrix M with elements $x_{ij}$ denoting the rating value of candidate $f_i$ for the criterion $C_j$. Since we have three criteria: $l = 3, j = 1,2,3$.

3) Normalize the decision matrix M by applying Eq. 5 to each element:

$$x'_{ij} = \frac{x_{ij}}{\sqrt{\Sigma_{i=1}^{k} x_{ij}^2}} \quad (5)$$

4) Create the weighted normalized decision matrix by multiplying each value $x^0_{ij}$ with the weight $w_j$ for the specific criterion:

$$x''_{ij} = w_j x'_i \quad \text{with } i = 1,...,k; j = 1,...,l \quad (6)$$

5) Determine the ideal solution $S*$ and the negative ideal solution $S'$. $S*$ may comprise elements $s_j^*$ where each element represents the best value among all candidates for criterion $C_j$. $S'$ accordingly consists of elements $s_j'$ with the worst values for each $C_j$. 6)

6) Calculate the distance of each candidate from $S*$ and $S'$. In this case, we apply the Euclidean distance:

$$D_i^* = \sqrt{\Sigma_{j=1}^{l}\left(s_j^* - x''_{ij}\right)^2} \quad (7)$$

$$D_i' = \sqrt{\Sigma_{j=1}^{l}\left(s_j' - x''_{ij}\right)^2} \quad (8)$$

7) Calculate the relative closeness $C_i^*$ to the best and worst solution using Eq. 9. Values close to 0 may indicate that the candidate is similar to the worst solution, whereas a value close to 1 may indicate that the candidate is similar to the ideal solution:

$$C_i^* = \frac{D_i'}{D_i^* + D_i'} \quad (9)$$

8) Sort all candidates according to $C_i^*$ in descending order. The candidate most similar to the ideal solution $S*$ may be the first entry.

Routing a packet from source to destination can fail for a number of reasons. Transmission errors and collisions on the wireless link may lead to immediate packet loss. Selecting unsuitable forwarders might unnecessarily increase the number of hops and therefore the error probability. And in some cases, there may simply be no suitable path available: the network may be partitioned. In addition, with geographic approaches, there is the chance that all paths end in a local optimum where no nodes closer to the destination are available. For the latter case, GPSR (Greedy Perimeter Stateless Routing) may provide the so-called *Perimeter Mode* to route a packet around such an optimum.

Most of these issues may directly depend on the specific scenario: node distribution, node density and obstacles for the radio propagation that heavily influence connectivity. Therefore, characterizing a scenario with respect to its best case potential may provide better insight on achievable performance.

Wireless communication in network research is usually modeled with stochastic processes describing channel behavior, reception probability etc. based on environmental factors. However, in order to find optimal short paths, a deterministic communication model is needed. It may describe, under which conditions two nodes can successfully communicate with each other using a direct link.

In an evaluation of at least some examples, a *Unit Disk Graph* with support for obstacles blocking the communication between two peers is used. Nodes may be connected if:

1) They are within a predefined transmission range $r_{tx}$ and
2) No obstacle boundary intersects with the straight line connecting both nodes, i.e. they are within line-of-sight.

If both conditions are true, perfect connectivity without packet loss and collisions might be assumed. In any other case, no communication might be possible (at all).

Shortest Path Optimal Routing: Assuming global knowledge within the simulation environment, a shortest path with respect to the number of hops may be found with the following algorithm:
Require: source s, destination $d$, set of all nodes $N$,

1: Initialize connectivity tree $T$ with root $s$

2: $C = N \setminus \{s\}, L_{in} = \{s\}, L_{out} = \emptyset$

3: while $C \neq \emptyset$ and $L_{in} \neq \emptyset$ do

4:    for all $c \in C$ do 5:        for all $l \in L_{in}$ do

6:       if $connected(c,l)$ then

7:        $C = C \setminus \{c\}$

8:        $Lout = Lout \cup \{c\}$

9:        Add $c$ as child of $l$ in $T$

10:       if $c = d$ then

11:        return Path from $s$ to $c$ in $T$

12:       end if

13:     end if

14:   end for

15: end for

16: $Lin = Lout, Lout = \emptyset$

17: end while

18: return No path

The described strategy may utilize (all) remaining nodes in each step along the path and is therefore called *select all.* However, at least some geographic routing protocols might only consider candidates closer to the destination as potential forwarders. Hence, at least some examples may use a second strategy *select closer* following this approach. It may limit the paths found by the optimal router to those discovered by protocols requiring constant progress towards the destination. The difference between both strategies indicates how much improvement may be expected from additional mechanisms specifically dealing with local routing optima.

To evaluate the performance of examples, it is compared to *Greedy Forwarding* and *Contention-Based Forwarding (CBF)* as defined in ETSI ITS GeoNetworking as well as the optimal routing from the previous section. Line forwarding capabilities are investigated with a Freeway scenario in Section V-B whereas a Manhattan Grid with buildings is used to provide more challenging task.

The simulation environment comprises the network simulator ns-3 (Network Simulator 3), the traffic simulator SUMO (Simulation of Urban Mobility) and the ETSI ITS protocol stack implemented by the ezCar2X framework. Multiple simulations of the same parameter set with different random seeds were run. At least some examples of LDMC were also implemented within the ezCar2X framework reusing most headers and data structures from the ETSI ITS GeoNetworking standard. In at least some cases, deviations were: a) the inclusion of the current number of direct neighbors in beacons and b) adding the forwarder list to the basic header for each packet transmission.

The main simulation models and parameters are summarized in the following, including stochastic channel models with fading. The standard used was IEEE 802.11p, the Tx (Transmission) power and rate were 15 dBm and 6 Mbps, respectively, and the propagation module used was that of Nakagami (for freeway simulations) and that of Chen et al. (for grid simulations). The packet size was 300 Bytes and the packet interval was 0.1s. The beacon interval was 1.0 s ...1.25 s, the neighbor timeout was 3s and $i_{max,tf}$ was 10, 1 ms. WD was $\{1,0,0\}$, WA $\{0,1,0\}$, WN $\{0,0,1\}$ and $W_{comb}$ $\{1/3,1/3,1/3\}$. 32 simulation runs were performed at a duration of 1000s per run.

An evaluation was performed for four different weight combinations $W = \{w_D, w_A, w_N\}$: $W_D, W_A, W_P$ using only one criterion and $W_{comb}$ using an equal combination of all three.

One additional aspect is worth noting: Nodes are removed from the neighbor table if no beacon was received from them for the specified *Neighbor Timeout.* In contrast to a default location table lifetime of 20 s, the evaluation is based on a shorter time of 3 s to accommodate for fast changing environments. Missing more than two beacons in a row may suggest an unavailable link. However, simulations were also repeated with a 20 s timeout leading to a severe degradation of achievable performance across all parameter sets. The exception was CBF which does not rely on neighbor information provided via beacons for routing and therefore showed no significant impact.

The *Freeway* scenario comprises a 4 km highway with 3 lanes in each direction. Vehicles drive on all lanes with randomized departure times and speeds varying between 80 and 130 km/h. Once stabilized, there are on average 270 vehicles active in the simulation used for evaluation. Network connectivity has been varied with different equipment rates $r_{eq}$ ranging from 10% to 100%. For each transmitted packet a random (*source, destination*) pair is chosen among all currently active nodes. However, nodes close to both ends of the highway were excluded to avoid edge effects.

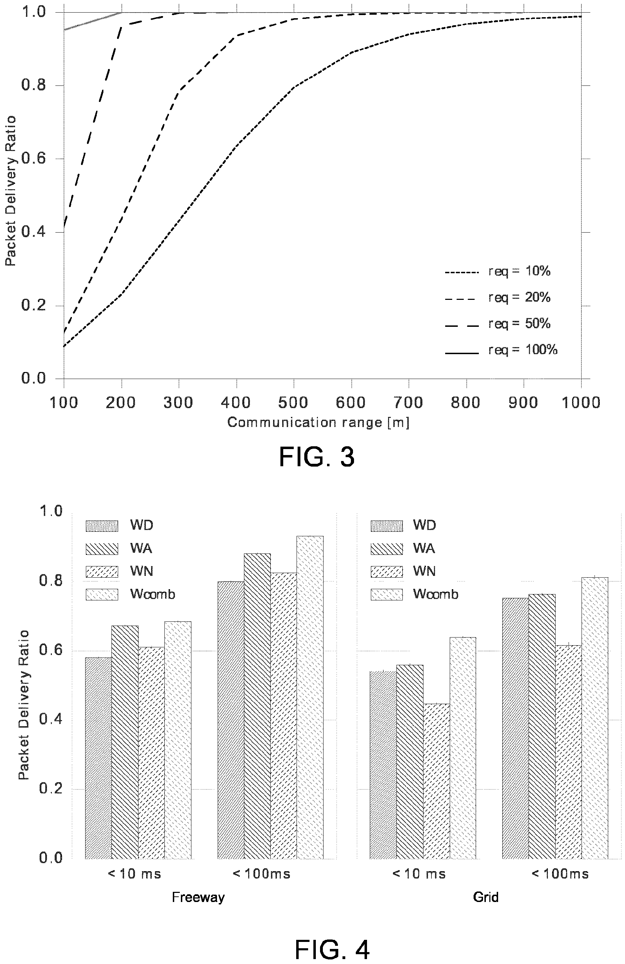

Applying the Shortest Path Optimal Routing approach, both selection strategies show identicalresults in an evaluation. This may be expected since there are no local optima in a straight line forwarding scenario. As shown in Fig. 3, a higher communication range may be required with lower penetration rates to provide sufficient connectivity. Fig. 3 shows a Freeway Scenario: Packet delivery ratio for the simplified communication model with optimal shortest path routing, only the select all strategy is shown. However, even with only 20% of the vehicles equipped, perfect packet delivery ratio may be achieved with 600 m communication range or more. With less range or fewer nodes the packet delivery ratio drops significantly indicating a partitioned network.

For the LDMC performance (of embodiments), an evaluation was conductor of the different alternatives for the criteria weights. An evaluation of packet delivery ratios for different weight combinations and delay constraints in the Freeway ($r_{eq}$=1.0) and Grid ( $r_{dep} = 2.0 \frac{veh.}{s}$ ) scenario was performed without the CBF extension (see Fig. 4). Fig. 4 shows a comparison of packet delivery ratios for different weight combinations and delay constraints in the Freeway (req =1.0) and Grid ( $r_{dep} = 2.0 \frac{veh.}{s}$ ) scenario. The CBF extension for LDMC is not used. While selection based on the age of the neighbor status may perform best among the single criteria for the dense scenario, ranking according to distance may be a better choice with lower penetration rates. Nevertheless, the combination of (all) criteria using $W_{comb}$ may provide better results than the individual metrics balancing distance gain per hop against information freshness. Approximately 69% of the packets are delivered within 10 ms and more than 90% in less than 100 ms.

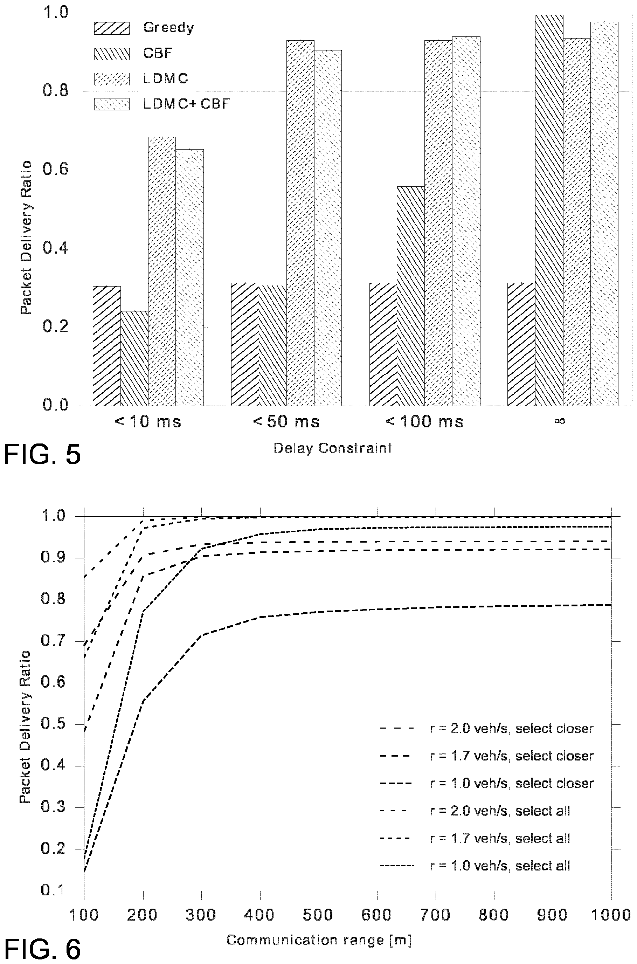

Comparing LDMC with other algorithms like Greedy and CBF may highlight the advantages of at least some examples for delay sensitive applications. As shown in Fig. 5, both standardized algorithms may deliver roughly 30% of the packets within 50 ms while LDMC may exceed 90%. Fig. 5 shows a Freeway Scenario: Packet delivery ratio for different delay requirements comparing LDMC and LDMC+CBF using $W_{comb}$ with existing algorithms (req =1.0). Without any timing constraints, the inherent reliability of CBF shows its advantage performing slightly better than at least some examples of LDMC. However, end-to-end delays of more than 400 ms may not be acceptable for some applications. Still, CBF and LDMC may be capable of getting close to perfect connectivity as indicated by the optimal router. Adding the CBF extension to LDMC may improve performance slightly in the unrestricted case but at the price of increased channel usage.

The *Manhattan Grid* scenario comprises 4 × 4 blocks each of size 360 m × 100 m surrounded by single lane roads connected with uncontrolled intersections. Buildings are placed between roads with their walls 15 m away from the road center. Vehicles take random trips with a target speed of 50 km/h. In contrast to the Freeway scenario network, density may be controlled via the departure rate $r_{dep}$ = {1...2} vehicles per second. With $r_{dep}$ = 1, traffic flows freely. However, with $r_{dep}$ = 2, vehicles start to queue at intersections and therefore remain longer in places with good connectivity. Similar to the freeway scenario, a random (*source,destination*) pair may be chosen for each packet.

Fig. 6 shows a packet delivery ratio for the Shortest Path Optimal Routing with various vehicle departure rates and both selection strategies. Fig. 6 shows a Manhattan Grid Scenario: Packet delivery ratio for the simplified communication model with optimal shortest path routing for both selection strategies. The results show that for all chosen parameters the packet delivery ratio reaches a saturation point at about 400 m of communication range. Increasing the range further has little effect on the connectivity. In contrast to the Freeway scenario, the *select closer* strategy performs noticeably worse than the *select all* approach. The gap between strategies is most prominent for the setup with the lowest node density. However, even with more vehicles in the scenario, some approaches relying on progress towards the destination with each step can at best reached a packet delivery ratio of 94% for $r_{dep}$ = 2 and 92% for $r_{dep}$ = 1.7 vehicles per second. Another observation worth mentioning is that even the *select all* strategy with unlimited communication range may fail to reach perfect packet delivery if the node density is too low. This behavior may be caused by the lack of suitable forwarding nodes at intersections making it impossible to route a packet *around the corner.*

The analysis of different weight combinations for examples may lead to results similar to those of the Freeway scenario with one exception: the significantly decreased delivery ratio if only the number of neighbors is considered. This criterion may be chosen to select nodes close to intersections which - if applied alone - it does well. Packets may get *stuck* in the region around an intersection since there are multiple nodes with good connectivity in close range. Once there, other nodes nearby may be preferred as the next hop and thus provide little progress. It also explains why the effect is less prominent with lower vehicle densities. Nonetheless, the need to balance the selection of well connected nodes with other optimization goals like sufficient distance progress may be obvious and its benefits are shown with the combined weight $W_{comb}$ outperforming all other options.

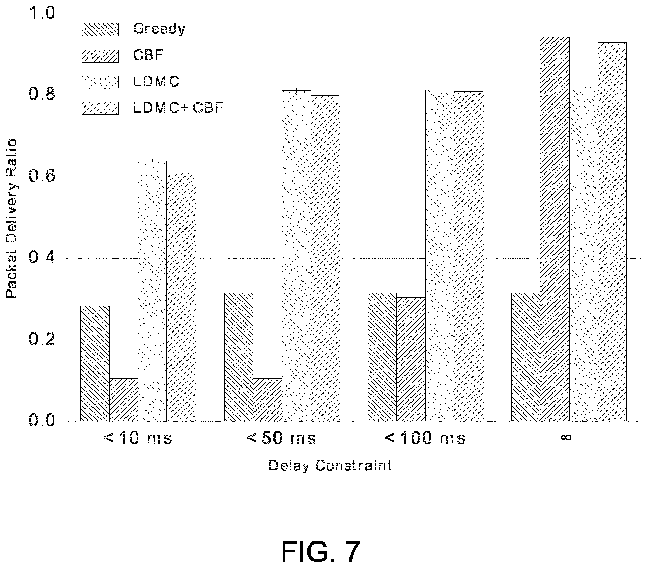

Fig.7 shows LDMC with and without CBF extension in comparison to Greedy forwarding and CBF. Fig. 7 shows Manhattan Grid Scenario: Packet delivery ratio for different delay requirements comparing LDMC and LDMC+CBF using

$$r_{dep} = 2.0 \frac{veh}{s}$$

$W_{comb}$ with existing algorithms ( ). Similar to the Freeway scenario, both standardized algorithms show a reduced performance if delay constraints of 100 ms or less are considered. Greedy reaching its maximum of 29% delivery ratio already after few milliseconds even surpasses CBF in the low latency segment, while CBF again demonstrates high reliability without any delay constraints. LDMC may be capable of delivering 80% of the packets within 50 ms but falls short of reaching more destinations afterwards. Adding the CBF extension to LDMC may improve long term reliability by more than 10% bringing it close to CBF. Furthermore, both protocols may achieve packet delivery ratios close to the optimal router using the *select closer* strategy for all traffic densities. The worst case difference between the Shortest Path Optimal Routing and LDMC of around 7% was found in the scenario with $r_{dep}$ = 1.

In summary, LDMC may show substantial improvement for end-to-end delay constraints below 100 ms while CBF appears to be slightly more reliable if latency is no concern. Furthermore, LDMC may be more predictable in terms of delay distribution delivering almost all packets within 50 ms and thus allowing for shorter timeout values on higher layers. Since both protocols share a lot of similarities, they can easily be combined. Based on the requirements of the application, the network layer may apply LDMC for packets with strict latency requirements while forwarding less demanding requests using an empty forwarder list (additional routing information) and thus falling back to standard CBF.

Efficient utilization of available channel resources may be another important requirement for routing protocols in VANETs. All compared approaches may share the same packet structure and beacon frequency. The main source for differences is therefore the number of times a packet is actually transmitted while forwarding. Furthermore, LDMC may add up to 60 Bytes (10 entries) to the packet header for the forwarder list. In all simulations, the channel busy ratio (CBR) was measured at several locations.

In an evaluation, the average number of times a packet was handed from the network to the access layer while forwarding (including attempts that could not be delivered) was measured. In both the freeway and the grid scenario, the average number of times forwarded was smallest using the greedy algorithm, highest using CBF, with LDMC and LDMC+CBF ranging between the extremes. In another evaluation, the measured channel busy ratio considering all transmitted packets including beacons was calculated. In the freeway scenario, the CBR was lowest using the greedy algorithm, closely followed by LDMC, with LDMC+CBF and CBF trailing behind. In the grid scenario, LDMC reaches the lowest CBR, trailed by greedy and LDMC+CBF (approximately 1.75 times as high) and CBF (approximately twice as high). The surprisingly large values for the Greedy approach in the Grid scenario may be explained by the broadcast fallback if no suitable neighbors are found. This may lead to a sudden *broadcast storm* if sufficient neighbors are available but none of them is closer to the destination.

AVERAGE TIMES FORWARDED

|  | Greedy | CBF | LDMC | LDMC+CBF |
|---|---|---|---|---|
| Freeway | 1.156 | 16.488 | 4.927 | 10.700 |
| Grid | 4.875 | 28.860 | 6.787 | 20.241 |

CHANNEL BUSY RATIO [%]

|  | Greedy | CBF | LDMC | LDMC+CBF |
|---|---|---|---|---|
| Freeway | 2.222 | 3.759 | 2.435 | 3.523 |
| Grid | 4.755 | 5.252 | 2.717 | 4.759 |

Overall LDMC demonstrates to be very efficient in both categories, reducing the number of forwarding attempts and thus channel usage compared to CBF while maintaining high reliability. However, even though adding the CBF extension may improve reliability further it may lead to an increase in resource consumption - especially in the grid scenario.

Examples provide LDMC, a geographic routing protocol for vehicular applications with strict latency requirements. Multi-criteria decision making may be applied to rank neighbors according to their position, time since the last update and number of connections. Simulations may show that the priority-based coordination of the candidates may decrease end-to-end delay while maintaining good reliability. In the selected grid scenario, LDMC may deliver up to 80% of the packets within 100 ms while Greedy and CBF might achieve only 30% in the same time frame. In addition, comparison with an optimal routing algorithm revealed limits for approaches relying on distance progress in more complex scenarios.

In embodiments, different protocol parameters, e.g. the weights for the individual ranking criteria, the maximum number of candidates and the time delay between list entries, may be used to further improve the routing. In some example, a model of additional traffic on the wireless channel may be used to further improve the performance.

More details and aspects of the method are mentioned in connection with the proposed concept or one or more examples described above (e.g. Fig. 1 and 2). The method may comprise one or more additional optional features corresponding to one or more aspects of the proposed concept or one or more examples described above or below.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example.

## Claims

1. A method for routing a data packet from a transmitting node to a destination node over a network comprising a plurality of intermediate nodes, the method comprising:

   determining (110) a hierarchical ranking of intermediate nodes of the plurality of intermediate nodes for a next hop of the routing based on a plurality of quantifiable characteristics of the intermediate nodes, wherein the plurality of quantifiable characteristics of an intermediate node comprises a geographical position of the intermediate node and an estimated number of further intermediate nodes neighboring the intermediate node; and broadcasting (120) the data packet with additional routing information, wherein the additional routing information comprises a plurality of identifiers for a subset of intermediate nodes of the plurality of intermediate nodes, wherein the subset of intermediate nodes is chosen based on the hierarchical ranking of the intermediate nodes.

2. The method according to claim 1, wherein the plurality of quantifiable characteristics of the intermediate node comprise a time of a most recent communication between the transmitting node and the intermediate node.

3. The method according to one of the claims 1 or 2, wherein the additional routing information comprises the plurality of identifiers in a hierarchical order based on the hierarchical ranking of the subset of intermediate nodes, and/or wherein a quantity of identifiers comprised in the plurality of identifiers is chosen based on at least one of a size of the data packet and a prioritization of the data packet.

4. The method according to one of the claims 1 to 3, wherein the broadcasting (120) of the data packet with the additional routing information corresponds to transmitting a wireless broadcast transmission of the at least one data packet and the additional routing information, and/or wherein the network is a vehicle-to-vehicle communication network.

5. The method according to one of the previous claims, further comprising receiving the data packet with additional routing information from a previous hop, wherein the determining (110) of the hierarchical ranking and/or a broadcasting (120) is performed, if the additional routing information received from the previous hop comprises an identifier of the transmitting node.

6. The method according to claim 5, wherein a broadcasting time of the broadcasting (120) is based on a hierarchical position of the identifier within the additional routing information received from the previous hop, and/or wherein the determining (110) of the hierarchical ranking and/or the broadcasting (120) is performed without the identifier of the transmitting node being comprised in the additional routing information received from the previous hop after a waiting time indicated by a quantity of identifiers of intermediate nodes comprised in the additional routing information received from the previous hop has elapsed.

7. The method according to one of the previous claims, wherein the plurality of quantifiable characteristics of an intermediate node comprises the geographical position of the intermediate node in relation to a geographical position of the destination node and/or in relation to a geographical position of the transmitting node.

8. The method according to one of the previous claims, wherein the determining (110) of the hierarchical ranking determines the hierarchical ranking for intermediate nodes of the plurality of intermediate nodes neighboring the transmitting node and located closer to a geographical position of the destination nodes than the transmitting node.

9. The method according to one of the previous claims,

   wherein the further intermediate nodes neighboring the intermediate node correspond to further intermediate nodes having communicated with the intermediate node during a pre-defined timeframe, and/or wherein the further intermediate nodes neighboring the intermediate node correspond to further intermediate nodes that are presumed to be reachable from the intermediate node,

and/or wherein the further intermediate nodes neighboring the intermediate node correspond to further intermediate nodes located within a pre-defined area surrounding a geographical position of the intermediate node.

10. The method according to one of the previous claims, wherein the plurality of quantifiable characteristics of an intermediate node comprises the geographical position of the intermediate node, the time of the most recent communication between the transmitting node and the intermediate node and the estimated number of further intermediate nodes neighboring the intermediate node.

11. The method according to one of the previous claims, wherein the determining (110) of the ranking comprises determining a mathematical distance of the plurality of quantifiable characteristics of at least a subset of the plurality of intermediate nodes to reference characteristics, wherein the reference characteristics are based on the plurality of quantifiable characteristics of at least the subset of the plurality of intermediate nodes, and wherein the ranking of the plurality of intermediate nodes is based on the mathematical distance of the plurality of quantifiable characteristics of at least the subset of the plurality of intermediate nodes from the reference characteristics.

12. A computer program having a program code for performing at least one of the methods according to one of the claims 1 to 11, when the computer program is executed on a computer, a processor, or a programmable hardware component.

13. A communication node (10) comprising a transceiver module (12), configured to communicate with further communication nodes in a network, and a control module (14) configured to perform the method according to one of the claims 1 to 11.

14. The communication node according to claim 13, wherein the transceiver module (12) is configured to communicate with the further communication nodes in a vehicle-to-vehicle communication network, and wherein the control module (14) is further configured to determine an estimated number of further communication nodes neighboring the communication node (10), and transmit information related to the estimated number of further communication nodes neighboring the communication node to the further communication nodes via the transceiver module (12), wherein the communication node (10) is the transmitting node and wherein the vehicle-to-vehicle communication network is the network with respect to the method being performed by the control module (14).

15. The communication node (10) according to claim 14, wherein the control module (14) is configured to communicate with the further communication nodes using one or more encapsulated packets, wherein the one or more encapsulated packets comprise an exterior packet comprising at least one interior packet, wherein the control module is configured to transmit payload information of the encapsulated packet within the at least one interior packet and to transmit the information related to the estimated number of further communication nodes neighboring the communication node within a header of the exterior packet.

**Patentansprüche**

1. Ein Verfahren zum Routen eines Datenpakets von einem Sendeknoten zu einem Zielknoten über ein Netzwerk, das eine Mehrzahl von Zwischenknoten umfasst, wobei das Verfahren umfasst:

Bestimmen (110) einer hierarchischen Rangfolge von Zwischenknoten der Mehrzahl von Zwischenknoten für einen nächsten Sprung des Routings basierend auf einer Mehrzahl von quantifizierbaren Charakteristika der Zwischenknoten, wobei die Mehrzahl von quantifizierbaren Charakteristika eines Zwischenknotens eine geographische Position des Zwischenknotens und eine geschätzte Anzahl von weiteren Zwischenknoten, die dem Zwischenknoten benachbart sind, umfasst; und
Rundsenden (120) des Datenpakets mit zusätzlicher Routing-Information, wobei die zusätzliche Routing-Information eine Mehrzahl von Identifizierern für einen Teilsatz von Zwischenknoten der Mehrzahl von Zwischenknoten umfasst, wobei der Teilsatz von Zwischenknoten basierend auf der hierarchischen Rangfolge der Zwischenknoten ausgewählt wird.

2. Das Verfahren gemäß Anspruch 1, wobei die Mehrzahl von quantifizierbaren Charakteristika des Zwischenknotens eine Zeit einer letzten Kommunikation zwischen dem Sendeknoten und dem Zwischenknoten umfassen.

3. Das Verfahren gemäß einem der Ansprüche 1 oder 2, wobei die zusätzliche Routing-Information die Mehrzahl von Identifizierern in einer hierarchischen Reihenfolge basierend auf der hierarchischen Rangfolge des Teilsatzes von Zwischenknoten umfasst,

und/oder wobei eine Menge von Identifizierern, die in der Mehrzahl von Identifizierern umfasst sind, basierend auf zumindest einer von einer Größe des Datenpakets und einer Priorisierung des Datenpakets ausgewählt wird.

4. Das Verfahren gemäß einem der Ansprüche 1 bis 3, wobei das Rundsenden (120) des Datenpakets mit der zusätzlichen Routing-Information einem Senden einer drahtlosen Broadcast-Übertragung des zumindest einen Datenpakets und der zusätzlichen Routing-Information entspricht, und/oder wobei das Netzwerk ein Fahrzeug-zu-Fahrzeug-Kommunikationsnetzwerk ist.

5. Das Verfahren gemäß einem der vorherigen Ansprüche, ferner umfassend Empfangen des Datenpakets mit zusätzlicher Routing-Information von einem vorherigen Sprung, wobei das Bestimmen (110) der hierarchischen Rangfolge und/oder ein Rundsenden (120) durchgeführt wird, wenn die zusätzliche Routing-Information, die von dem vorhergehenden Sprung empfangen wird, einen Identifizierer des Sendeknotens umfasst.

6. Das Verfahren gemäß Anspruch 5, wobei eine Rundsendezeit des Rundsendens (120) auf einer hierarchischen Position des Identifizierers innerhalb der von dem vorherigen Sprung empfangenen zusätzlichen Routing-Information basiert,

und/oder wobei das Bestimmen (110) der hierarchischen Rangfolge und/oder das Rundsenden (120) durchgeführt wird, ohne dass der Identifizierer des Sendeknotens in der zusätzlichen Routing-Information umfasst ist, die von dem vorherigen Sprung empfangen wird, nachdem eine Wartezeit, die durch eine Menge von Identifizierern von Zwischenknoten angegeben wird, die in der zusätzlichen von dem vorherigen Sprung empfangenen Routing-Information umfasst ist, verstrichen ist.

7. Das Verfahren gemäß einem der vorherigen Ansprüche, wobei die Mehrzahl von quantifizierbaren Charakteristika eines Zwischenknotens die geografische Position des Zwischenknotens in Bezug auf eine geografische Position des Zielknotens und/oder in Bezug auf eine geografische Position des Sendeknotens umfassen.

8. Das Verfahren gemäß einem der vorherigen Ansprüche, wobei das Bestimmen (110) der hierarchischen Rangfolge die hierarchische Rangfolge für Zwischenknoten der Mehrzahl von Zwischenknoten bestimmt, die dem Sendeknoten benachbart sind und sich näher an einer geographischen Position der Zielknoten befinden als der Sendeknoten.

9. Das Verfahren gemäß einem der vorherigen Ansprüche,

wobei die weiteren Zwischenknoten, die dem Zwischenknoten benachbart sind, weiteren Zwischenknoten entsprechen, die mit dem Zwischenknoten während eines vordefinierten Zeitrahmens kommuniziert haben, und/oder wobei die weiteren Zwischenknoten, die dem Zwischenknoten benachbart sind, weiteren Zwischenknoten entsprechen, von denen angenommen wird, dass sie von dem Zwischenknoten aus erreichbar sind, und/oder wobei die weiteren Zwischenknoten, die dem Zwischenknoten benachbart sind, weiteren Zwischenknoten entsprechen, die sich in einem vordefinierten Bereich befinden, der eine geografische Position des Zwischenknotens umgibt.

10. Das Verfahren gemäß einem der vorherigen Ansprüche, wobei die Mehrzahl von quantifizierbaren Charakteristika eines Zwischenknotens die geographische Position des Zwischenknotens, die Zeit der letzten Kommunikation zwischen dem Sendeknoten und dem Zwischenknoten und die geschätzte Anzahl weiterer Zwischenknoten, die dem Zwischenknoten benachbart sind, umfassen.

11. Das Verfahren gemäß einem der vorherigen Ansprüche, wobei das Bestimmen (110) der Rangfolge ein Bestimmen einer mathematischen Distanz der Mehrzahl von quantifizierbaren Charakteristika von zumindest einem Teilsatz der Mehrzahl von Zwischenknoten zu Referenzcharakteristika umfasst, wobei die Referenzcharakteristika auf der Mehrzahl von quantifizierbaren Charakteristika von zumindest dem Teilsatz der Mehrzahl von Zwischenknoten basieren und wobei die Rangfolge der Mehrzahl von Zwischenknoten auf der mathematischen Distanz der Mehrzahl von quantifizierbaren Charakteristika von zumindest dem Teilsatz der Mehrzahl von Zwischenknoten von den Referenzcharakteristika basiert.

12. Ein Computerprogramm mit einem Programmcode zum Ausführen von zumindest einem der Verfahren gemäß einem der Ansprüche 1 bis 11, wenn das Computerprogramm auf einem Computer, einem Prozessor oder einer programmierbaren Hardwarekomponente ausgeführt wird.

**13.** Ein Kommunikationsknoten (10), der ein Sendeempfängermodul (12), das ausgebildet ist, mit weiteren Kommunikationsknoten in einem Netzwerk zu kommunizieren, und ein Steuermodul (14), das ausgebildet ist, das Verfahren gemäß einem der Ansprüche 1 bis 11 durchzuführen, umfasst.

**14.** Der Kommunikationsknoten gemäß Anspruch 13, wobei das Sendeempfängermodul (12) ausgebildet ist, mit den weiteren Kommunikationsknoten in einem Fahrzeug-zu-Fahrzeug-Kommunikationsnetzwerk zu kommunizieren, und wobei das Steuermodul (14) ferner ausgebildet ist, eine geschätzte Anzahl von weiteren Kommunikationsknoten, die dem Kommunikationsknoten (10) benachbart ist, zu bestimmen, und Information in Bezug auf die geschätzte Anzahl weiterer Kommunikationsknoten, die dem Kommunikationsknoten benachbart sind, über das Sendeempfängermodul (12) an die weiteren Kommunikationsknoten zu übertragen, wobei der Kommunikationsknoten (10) der Sendeknoten ist und wobei das Fahrzeug-zu-Fahrzeug-Kommunikationsnetzwerk das Netzwerk in Bezug auf das Verfahren ist, das durch das Steuermodul (14) durchgeführt wird.

**15.** Der Kommunikationsknoten (10) gemäß Anspruch 14, wobei das Steuermodul (14) ausgebildet ist, mit den weiteren Kommunikationsknoten unter Verwendung eines oder mehrerer eingekapselter Pakete zu kommunizieren, wobei das eine oder die mehreren eingekapselten Pakete ein äußeres Paket umfassen, das zumindest ein inneres Paket aufweist, wobei das Steuermodul ausgebildet ist, Nutzdateninformation des eingekapselten Pakets innerhalb des zumindest einen inneren Pakets zu übertragen und die Information bezüglich der geschätzten Anzahl weiterer Kommunikationsknoten, die dem Kommunikationsknoten benachbart sind, innerhalb eines Headers des äußeren Pakets zu übertragen.

## Revendications

**1.** Procédé de routage d'un paquet de données d'un noeud émetteur à un noeud de destination sur un réseau comprenant une pluralité de noeuds intermédiaires, le procédé comprenant le fait de :

déterminer (110) un classement hiérarchique des noeuds intermédiaires de la pluralité de noeuds intermédiaires pour un saut suivant du routage sur la base d'une pluralité de caractéristiques quantifiables des noeuds intermédiaires, la pluralité de caractéristiques quantifiables d'un noeud intermédiaire comprenant une position géographique du noeud intermédiaire et un nombre estimé d'autres noeuds intermédiaires voisins du noeud intermédiaire ; et
diffuser (120) le paquet de données avec des informations de routage supplémentaires, les informations de routage supplémentaires comprenant une pluralité d'identifiants pour un sous-ensemble de noeuds intermédiaires de la pluralité de noeuds intermédiaires, le sous-ensemble de noeuds intermédiaires étant choisi sur la base du classement hiérarchique des noeuds intermédiaires.

**2.** Procédé selon la revendication 1, dans lequel la pluralité de caractéristiques quantifiables du noeud intermédiaire comprend un temps d'une communication la plus récente entre le noeud émetteur et le noeud intermédiaire.

**3.** Procédé selon l'une des revendications 1 ou 2, dans lequel les informations de routage supplémentaires comprennent la pluralité d'identifiants dans un ordre hiérarchique basé sur le classement hiérarchique du sous-ensemble de noeuds intermédiaires,
et/ou dans lequel une quantité d'identifiants compris dans la pluralité d'identifiants est choisie sur la base d'au moins l'un d'une taille du paquet de données et un ordre de priorité du paquet de données.

**4.** Procédé selon l'une des revendications 1 à 3, dans lequel la diffusion (120) du paquet de données avec les informations de routage supplémentaires correspond au fait de transmettre une transmission de diffusion sans fil de l'au moins un paquet de données et des informations de routage supplémentaires, et/ou dans lequel le réseau est un réseau de communication de véhicule à véhicule.

**5.** Procédé selon l'une des revendications précédentes, comprenant en outre le fait de recevoir le paquet de données avec des informations de routage supplémentaires provenant d'un saut précédent, dans lequel la détermination (110) du classement hiérarchique et/ou une diffusion (120) est effectuée, si les informations de routage supplémentaires reçues provenant du saut précédent comprennent un identifiant du noeud émetteur.

**6.** Procédé selon la revendication 5, dans lequel un temps de diffusion de la diffusion (120) est basé sur une position hiérarchique de l'identifiant dans les informations de routage supplémentaires reçues provenant du saut précédent,

et/ou dans lequel la détermination (110) du classement hiérarchique et/ou la diffusion (120) est effectuée sans que l'identifiant du noeud émetteur n'étant compris dans les informations de routage supplémentaires reçues provenant du saut précédent, après l'écoulement d'un temps d'attente indiqué par une quantité d'identifiants de noeuds intermédiaires compris dans les informations de routage supplémentaires reçues provenant du saut précédent.

7. Procédé selon l'une des revendications précédentes, dans lequel la pluralité de caractéristiques quantifiables d'un noeud intermédiaire comprend la position géographique du noeud intermédiaire par rapport à une position géographique du noeud de destination et/ou par rapport à une position géographique du noeud émetteur.

8. Procédé selon l'une des revendications précédentes, dans lequel la détermination (110) du classement hiérarchique détermine le classement hiérarchique pour les noeuds intermédiaires de la pluralité de noeuds intermédiaires voisins du noeud émetteur et situés plus près d'une position géographique des noeuds de destination que le noeud émetteur.

9. Procédé selon l'une des revendications précédentes,

dans lequel les autres noeuds intermédiaires voisins du noeud intermédiaire correspondent à d'autres noeuds intermédiaires ayant communiqué avec le noeud intermédiaire au cours d'un délai prédéfini,
et/ou dans lequel les autres noeuds intermédiaires voisins du noeud intermédiaire correspondent à d'autres noeuds intermédiaires qui sont présumés accessibles à partir du noeud intermédiaire,
et/ou dans lequel les autres noeuds intermédiaires voisins du noeud intermédiaire correspondent à d'autres noeuds intermédiaires situés dans une zone prédéfinie entourant une position géographique du noeud intermédiaire.

10. Procédé selon l'une des revendications précédentes, dans lequel la pluralité de caractéristiques quantifiables d'un noeud intermédiaire comprend la position géographique du noeud intermédiaire, le temps de la communication la plus récente entre le noeud émetteur et le noeud intermédiaire et le nombre estimé d'autres noeuds intermédiaires voisins du noeud intermédiaire.

11. Procédé selon l'une des revendications précédentes, dans lequel la détermination (110) du classement comprend le fait de déterminer une distance mathématique entre la pluralité de caractéristiques quantifiables d'au moins un sous-ensemble de la pluralité de noeuds intermédiaires et des caractéristiques de référence, les caractéristiques de référence étant basées sur la pluralité de caractéristiques quantifiables d'au moins le sous-ensemble de la pluralité de noeuds intermédiaires, et le classement de la pluralité de noeuds intermédiaires étant basé sur la distance mathématique entre la pluralité de caractéristiques quantifiables d'au moins le sous-ensemble de la pluralité de noeuds intermédiaires et les caractéristiques de référence.

12. Programme d'ordinateur présentant un code de programme pour effectuer au moins l'un des procédés selon l'une des revendications 1 ou 11, lorsque le programme d'ordinateur est exécuté sur un ordinateur, un processeur ou un composant matériel programmable.

13. Noeud de communication (10) comprenant un module émetteur-récepteur (12), configuré pour communiquer avec d'autres noeuds de communication dans un réseau, et un module de commande (14) configuré pour exécuter le procédé selon l'une des revendications 1 à 11.

14. Noeud de communication selon la revendication 13, dans lequel le module émetteur-récepteur (12) est configuré pour communiquer avec les autres noeuds de communication dans un réseau de communication de véhicule à véhicule, et dans lequel le module de commande (14) est en outre configuré pour déterminer un nombre estimé d'autres noeuds de communication voisins du noeud de communication (10), et transmettre des informations relatives au nombre estimé d'autres noeuds de communication voisins du noeud de communication aux autres noeuds de communication via le module émetteur-récepteur (12), le noeud de communication (10) étant le noeud émetteur et le réseau de communication de véhicule à véhicule étant le réseau en ce qui concerne le procédé exécutée par le module de commande (14).

15. Noeud de communication (10) selon la revendication 14, dans lequel le module de commande (14) est configuré pour communiquer avec les autres noeuds de communication en utilisant un ou plusieurs paquets encapsulés, dans lequel le ou les paquets encapsulés comprennent un paquet extérieur comprenant au moins un paquet intérieur, dans lequel le module de commande est configuré pour transmettre des informations de charge utile du paquet encapsulé dans le au moins un paquet intérieur et pour transmettre les informations relatives au nombre estimé d'autres noeuds de communication voisins du noeud de communication dans un en-tête du paquet extérieur.

FIG. 1

FIG. 2

FIG. 3

FIG. 4

FIG. 5

FIG. 6

FIG. 7

## REFERENCES CITED IN THE DESCRIPTION

**Patent documents cited in the description**

- EP 2262188 A1

- US 20050111428 A1

**Non-patent literature cited in the description**

- **YOON S-J et al.** *Dual-path-based reliable geocasting for tactical ad-hoc networks*